# EUROPEAN PATENT SPECIFICATION

(11) **EP 0 596 660 B1**
(45) Date of publication and mention of the grant of the patent: **20.12.1995**
(21) Application number: 93308631.6
(22) Date of filing: 28.10.1993
(51) Int. Cl.: B23H 1/08, B23H 5/12

(54) **An electric discharge machining fluid**
Bearbeitungsflüssigkeit für Funkenerosionsmaschine
Liquide d'usinage pour machine à usiner par décharges électro-érosives

(30) Priority: 02.11.1992 JP 315522/92
(43) Date of publication of application: 11.05.1994
(73) Proprietor: SODICK CO., LTD., Yokohama Kanagawa 222 (JP)
(72) Inventor: Takahashi, Nobuyuki, Yokohama 244 (JP)
(74) Representative: Kensett, John Hinton

(56) References cited:
- EP-A- 0 304 235
- EP-A- 0 548 932
- DE-A- 3 631 331
- PATENT ABSTRACTS OF JAPAN vol. 014, no. 277 (M-0985)15 June 1990 & JP-A-02 083 119 (NAOTAKE MORI) 23 March 1990

## Description

The present invention relates generally to an electric discharge machining ("EDM") fluid and, more particularly, the present invention relates to an EDM fluid for surface finishing, said fluid being produced by admixing a powder to a liquid dielectric.

In an electric discharge machine, a liquid dielectric such as oil or water is generally used as an EDM fluid. It is known to use the EDM fluid which is produced by admixing conductive or semiconductive powder to the liquid dielectric. The liquid dielectric mixed with the conductive powder is used for machining a workpiece by electrical discharge through the conductive powder.

For example, Japanese Patent Publication No. 52-26357 published on July 13, 1977 discloses a method of adding conductive powder to a liquid dielectric supplied into a gap between a tool electrode and a workpiece and controlling the amount of the powder according to a desired machining over size. The conductive powders to be added are produced by mixing metal powder or graphite powder having a particle diameter of 5 to 10 micrometres with machined chips such as graphite and carbon black of 10 to 100 angstroms. The mixed conductive powders are admixed to the liquid dielectric with a density from 0.05 to 15 g/litre.

Japanese Patent Publication No. 55-27810 published on July 23, 1980 discloses a method of admixing metal powders susceptible of vaporization (i.e. with high vapour pressure) to a liquid dielectric supplied into a machining gap. The metal powder is easily vaporized at a high temperature of electric discharge and the metal vapours are dispersed in the liquid dielectric increasing conductivity thereof to easily induce electric discharge by applying voltage pulses. Cadmium, indium, zinc, magnesium, tin, lead, and bismuth are used as the metal powders.

Japanese Laid-Open Patent Publication No. 55-500783 published on October 16, 1980 discloses that a liquid dielectric mixed with conductive powder, such as metal powder or graphite of up to 5 micrometres at 0.001 to 1 % by volume, increases removal rate with reduction of electrode wear rate and improvement of machined surface.

Japanese Patent Publication No. 54-20718 published on July 25, 1979 discloses an electric discharge machining method in which a paste produced by kneading a mixture of powder mainly comprising a conductive powder and a liquid dielectric, is interposed in a desired machining gap. Graphite, brass, tungsten, silver-tungsten, silver, copper, copper tungsten are used as the conductive powders. Also a paste may be produced by kneading a mixture of conductive powder and a magnetic powder of barium ferrite and high carbon steel with a small amount of the liquid dielectric.

Japanese Laid-Open Patent Publication No. 2-83119 published on March 23, 1990 discloses a method of forming a surface layer of a workpiece by electrical discharge in which the material for forming the surface layer is interposed in powder form between a tool electrode and the workpiece. An EDM fluid includes 20 g/litre silicon having an average particle diameter of about 20 to 40 micrometres mixed with a liquid dielectric. Tungsten carbide and a semiconductor such as zirconium boride can be used as the powder material, for example.

An object of the present invention is to provide an EDM fluid and a method of electric discharge machining in which a fine and smooth surface of a workpiece is formed.

It is another object of the invention to provide an EDM fluid and a method for electric discharge machining in which a powder is distributed uniformly in a liquid dielectric in order to machine a workpiece into a desired configuration with a uniformly high machining accuracy, even for large tool electrodes.

Additional objects, advantages and novel features of the invention will be set forth in the description which follows, and will become apparent to those skilled in the art upon reading this description or practicing the invention. The objects and advantages of the invention may be realized and attained by the invention in the appended claims.

According to the present invention there is provided an electric discharge machining fluid comprising a mixture of a liquid dielectric and a powder of silicon mainly composed of polycrystalline silicon and a small amount of inorganic oxide. Preferably, the powder is present in an amount from 0.1 to 5.0 wt %, more preferably, from 0.2 to 3.0 wt % of the liquid dielectric. Additionally, the inorganic oxide includes silicon oxide, iron oxide and/or calcium oxide and is present in an amount from 0.01 to 10 wt % of the silicon. Further, the silicon has an average particle diameter of 0.1 to 100 micrometres.

In accordance with the present invention, the EDM fluid is produced by kneading the powder with a liquid kneading medium dissolvable in the liquid dielectric to make a liquid concentrate and dispersing this liquid concentrate in the liquid dielectric. Preferably, the liquid kneading medium includes oils mainly composed of an aromatic hydrocarbon or aromatic hydrocarbons having a density of more than 0.93 g/millilitre at 15°C.

According to another aspect of the present invention, there is provided a method for machining a workpiece by electric discharge using a tool electrode comprising; admixing a powder of silicon mainly composed of polycrystalline silicon and a small amount of inorganic oxide to a liquid dielectric to form an electric discharge machining fluid, the powder being present in an amount from 0.1 to 5.0 wt % of the liquid dielectric; and supplying said electric discharge machining fluid into a machining gap between the workpiece and the tool electrode for use in a finishing process.

Embodiments of the present invention will now be described, by way of example only, with reference to the accompanying diagrammatic drawings, in which;
Figure 1 shows a micrograph of a cross-section of a workpiece surface after a machining process;
Figure 2 shows a micrograph of a cross-section of a workpiece surface after a machining process with an EDM fluid of the invention;
Figure 3 shows a graph of the results of an Auger electron spectroscopic analysis of the workpiece surface before the machining process;
Figure 4 shows a graph of the results of an Auger electron spectroscopic analysis of the workpiece surface after the machining process;
Figure 5 shows a graph of the results of an Auger electron spectroscopic analysis of the workpiece surface after the machining process with the EDM fluid of the invention;
Figure 6 shows a graph of the roughness of the workpiece surface after the machining process; and
Figure 7 shows a graph of the roughness of the workpiece surface after the machining process with the EDM fluid of the invention.

The inventor has experimentally studied the method for forming a smooth surface of a workpiece required industrially for the finishing process in detail, taking full advantage of the characteristics of the metal structure of the workpiece. The inventor has discovered that components of a specific semiconductive powder dispersed in a liquid dielectric can react with other components (for example, components in the liquid dielectric and in the workpiece) to form a smooth surface of the workpiece having a desired metal structure.

The present invention involves the experimental discovery of the phenomena listed below.
(a) Even if silicon powder is thermally fused by electric discharge, it is unlikely to adhere to the workpiece as a coating.
(b) When performing electric discharge machining using the liquid dielectric with the polycrystalline silicon powder and a small amount of additional powder having specific components added, the workpiece of α-iron based material forms a surface having an alloy of silicon and components not contained in the additional powder.
(c) The alloy is a carbon-iron-silicon alloy and the workpiece surface of α-iron based material having the alloy is remarkably uniform.
(d) The formed uniform surface of the workpiece has no relation with a certain physical operation i.e., relative approach movement between the tool electrode and the workpiece.

In view of these phenomena, the inventor has found the EDM fluid of the present invention in which the powder of polycrystalline silicon and a small amount of inorganic oxide is uniformly dispersed in the liquid dielectric.

The silicon which can be used in preparing the EDM fluid of the present invention is polycrystalline silicon. Although noncrystalline, polycrystalline and single crystalline silicons are known, polycrystalline silicon is experimentally selected for forming a smooth surface of the workpiece.

However, not all the silicon powder is required to be polycrystalline silicon. It was found that the EDM fluid of the present invention can obtain the expectant advantages even if a small amount of additional silicons such as noncrystalline silicon and others are contained therein besides the polycrystalline silicon. If additional silicons are contained in the EDM fluid, their amount is preferably not more than 2 to 3 wt % of the polycrystalline silicon, although in some cases their amount can be some 20 wt % of the polycrystalline silicon depending upon the electrical discharge machining conditions. Therefore, the polycrystalline silicon is required to be present in amount of more than 80 wt % of the silicon powder.

The silicon powder mainly composed of polycrystalline silicon requires sufficient particle diameter and particle diameter distribution to be dispersed in the liquid dielectric. If the powder's particles have an excessively small diameter, they are liable to cohere and settle. Whereas if the powder's particles have too large a diameter, they may disturb the stability of the machining process or introduce a short circuit between a tool electrode and a workpiece resulting in damage of the workpiece. It was found that the average particle diameter of 0.01 to 100 micrometres is usable. Preferably, the average particle diameter is 0.1 to 80 micrometres since the particle surface oxidized through the grinding process impairs the conductivity. The average diameter of 1.0 to 50 micrometres is more preferable still.

In industrial practice, the powders which are fined by grinding are conveniently not classified. In this case, with regard to particle diameter distribution, silicon powder having a particle diameter of about 1.0 to 50 micrometres preferably holds more than 1/3 to smooth the workpiece surface.

The inorganic oxide which can be used in preparing the EDM fluid of the invention for forming the surface of an α-iron based workpiece having a carbon-iron-silicon alloy may be the oxide of metal elements or the oxide of nonmetal elements. In addition, the inorganic oxide may be composed of one or a plurality of types. The inorganic oxide may compose powder together with the polycrystalline silicon or independently.

The inorganic oxide preferably comprises silicon oxide, iron oxide and/or calcium oxide. In this case, it was found that when a small amount of such inorganic oxide is included in the powder, a smooth surface of the workpiece can be obtained under a wide variety of machining conditions.

Further, a small amount of inorganic oxide is acceptable. Said small amount means an amount effective to realize the above-mentioned workpiece surface through an electric discharge machining process when the powder of the polycrystalline silicon and the inorganic oxide is dispersed in the liquid dielectric. To be specific, the inorganic oxide is preferably 0.01 to 10 wt % of the silicon mainly composed of polycrystalline silicon.

The liquid dielectric in which the polycrystalline silicon and the inorganic oxide are dispersed can be a water based dielectric or an oil based dielectric. For the water based dielectric, water or water including water soluble substances such as a water-soluble oligomer and a water-soluble high polymer is generally used. A mineral oil is generally used as the oil based dielectric and oil soluble matter may be dissolved therein. However, oil composed of components with a molecular structure having a number of carbon atoms is preferable to obtain the advantages of the present invention. For example, oil composed of an aromatic hydrocarbon or aromatic hydrocarbons, or oil to which aromatic hydrocarbons are added, can be used.

Preferably, in preparing the EDM fluid, the powder is admixed to the liquid dielectric with 0.1 to 5.0 wt % of the liquid dielectric, and more preferably 0.2 to 3.0 wt %. As long as the above-mentioned mix ratio is adopted in preparing an EDM fluid, it is within the scope of the invention even if the EDM fluid is supplied to a machining gap between the tool electrode and the workpiece in the machining process and later part of the powder settles in an electrical discharge machine.

As long as they do not impair the advantages of the invention, additives such as machining efficiency improvers, dispersants, redispersion promoters, antioxidants, and antifoamers may be added to the EDM fluid.

Any means for dispersing the powder of the polycrystalline silicon and the inorganic oxide in the liquid dielectric can be employed. A dispersant such as a surface active agent may be used. Particularly, ethylene oxide colloidal dispersant is effective.

Further, the inventor has discovered an advantageous method for dispersing the powder uniformly. In this method, the powder and a liquid kneading medium dissolvable in a liquid dielectric are kneaded together by shearing force to make a liquid concentrate. Then, the liquid concentrate is dissolved in the liquid dielectric.

The amount of the powder to be mixed with the liquid kneading medium is from about 10 to 80 wt % of the total weight, depending on the particle diameter and the particle diameter distribution.

A liquid dielectric may serve as a liquid kneading medium. However, when the oil based dielectric is used, the oil mainly composed of an aromatic hydrocarbon or aromatic hydrocarbons is preferable. More preferably, the oil mainly composed of an aromatic hydrocarbon or aromatic hydrocarbons is a high density oil having a density of 0.93 g/millilitre at 15°C and a kinematic viscosity of more than 100 cSt at 40°C because it can prevent the powder from settling by weakening the mutual cohesive force thereof. In this case, it is not entirely necessary that the oil dielectric and the oil kneading medium are of the same degree in kinematic viscosity.

Any means for kneading the powder and the liquid kneading medium under shearing effect can be used. The kneading device is well known and generally used in processing high-molecular compounds, and in producing paints and paper. For example, in processing high-molecular compounds, a roll, a kneader, a Banbury mixer and an extruder are used having a mechanism for kneading high molecular compounds by a high shearing force in a two- or three-dimensional direction.

The concentrate is a liquid rather than a paste even when the above-mentioned high density oil is used although its kinematic viscosity depends on the amount of the powder. It is found that when preparing an EDM fluid using this concentrate, the powder will not form a mass in the liquid dielectric saving the powder material and not expanding the machining gap uselessly in machining process.

A use of the EDM fluid of the present invention allows the workpiece to form a very smooth surface having the above-mentioned metal compositions by employing the EDM conditions generally used for finishing the workpiece. For example, the EDM conditions on machining power for finishing is given below:

| | |
|---|---|
| Polarity | Workpiece is poled positive |
| ON pulse time | 1 to 20 microseconds |
| OFF pulse time | 2 to 80 microseconds |
| Current value | 0.1 to 10 amperes (in short circuit) |

In addition, there is no limitation on an EDM apparatus equipped with a fluid supply device for carrying out the method of the invention.

### Example

An EDM fluid was prepared using the following powder material:

| | |
|---|---|
| Polycrystalline silicon (particle diameter of 1 to 80 micrometres) | 95.5 wt % |
| Silicon dioxide (SiO₂) | 3.0 wt % |
| Iron oxide (Fe₂O₃) | 1.0 wt % |
| Calcium oxide (CaO₂) | 0.5 wt % |

500 g of powder of this composition, 20 g of ethylene oxide colloidal dispersant, and 5 g of 2,6-di-tert-butyl were added to 500 g of an aromatic hydrocarbon having a kinematic viscosity of 930 cSt at 40°C and a density of 0.98 g/millilitre at 15°C to make a concentrate. They were gradually mixed at 60°C by stirring for one hour. Then, the mixture was kneaded by means of two rolls having different rotation rates until it became a homogeneous concentrate. The concentrate was a liquid substance having a fluidity. The liquid concentrate was added to a mineral oil based dielectric having a kinematic viscosity of 2 cSt at 40°C with 1 wt % of the dielectric, and was stirred for 30 minutes to prepare an EDM fluid.

Using this EDM fluid, electric discharge machining was performed under the following conditions:

| | |
|---|---|
| Electric discharge machine model: | Sodick A35 MARK 21 |
| Tool Electrode: | 30 mm φ |
| Workpiece material: (Japanese Industrial Standards) | SKD-61 |

| Electrical condition: | |
|---|---|
| Polarity | Workpiece poled positive |
| On pulse | 4 microseconds |
| Current | 5 amperes (in short circuit) |

### Results

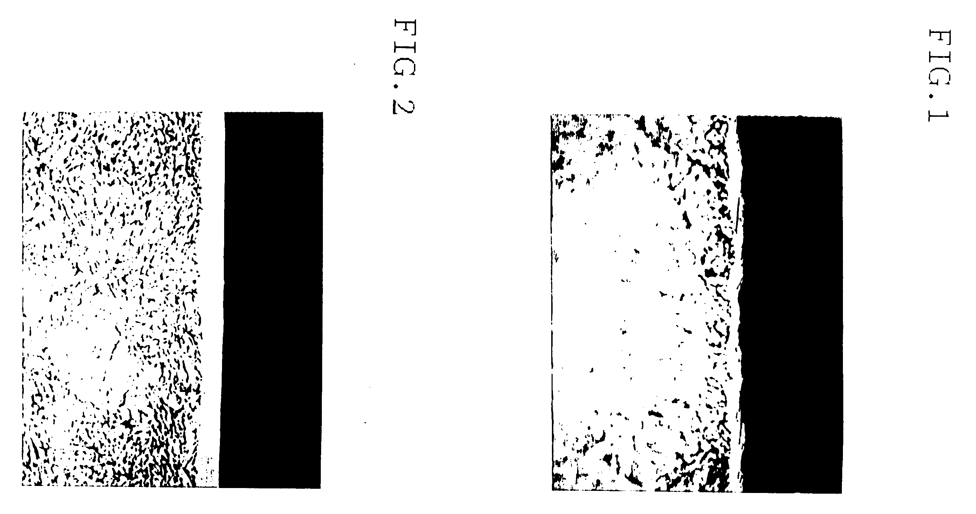

Figure 1 is a micrograph with a magnification of X1000 showing the cross section of the workpiece surface when the electrical discharge machining was performed on the same workpiece using the same mineral oil based dielectric under the same EDM conditions as used in the above example but without the powder being added to the dielectric. In Figure 1, a layer is formed on the workpiece surface, however, it is thin and uneven.

Figure 2 is a micrograph with a magnification of X1000 showing the cross section of the workpiece surface finished in the above example. In Figure 2, a relatively fine, thick and very smooth layer is formed on the workpiece surface.

In addition, the X-ray analysis of the workpiece surface was carried out as follows:

| X-ray Source: | |
|---|---|
| Rad-C system | |
| Cathode | Cu |
| Voltage | 50 KV |
| Current | 200 mA |

| Measuring Conditions: | |
|---|---|
| Time constant | 1.0 sec |
| Scanning range | 20 to 80 degrees |

According to the X-ray analysis, α-iron was detected from a workpiece before the machining process, whereas α-iron, γ-iron and a carbon(C)-iron(Fe)-silicon(Si) alloy were detected from the workpiece surface after the machining process. Therefore, when using the EDM fluid of the invention, it was found that some of the α-iron on the workpiece surface had been shifted to γ-iron due to heat transformation, and a carbon-iron-silicon alloy had been produced. Further, when such an alloy is produced, a fine, thick and smooth layer is formed on the workpiece surface, as shown in Figure 2.

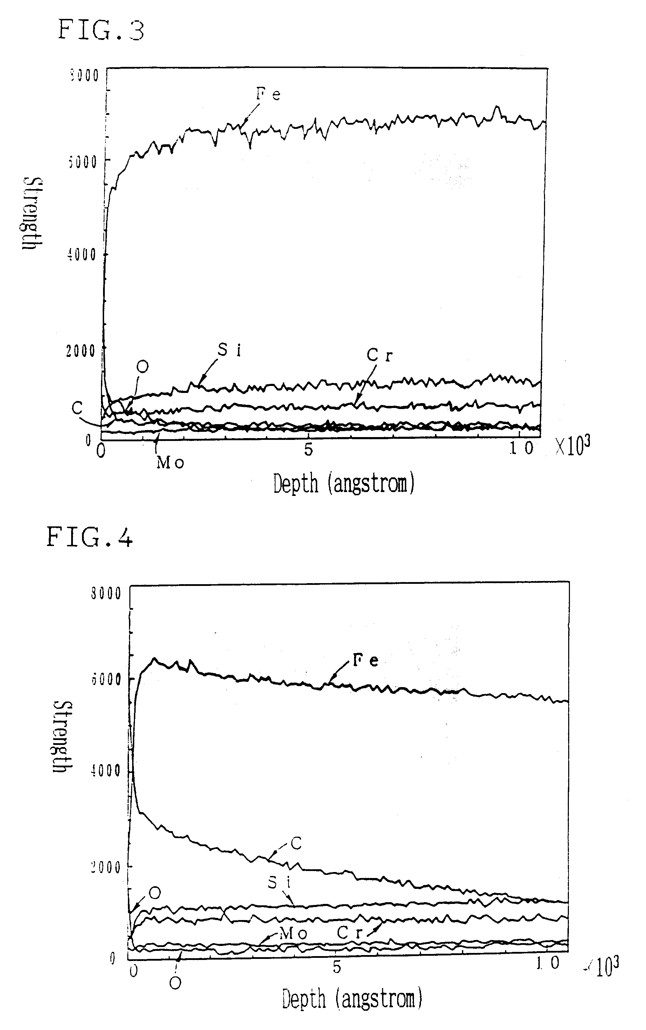

Additionally, workpiece surfaces before and after the machining process were analyzed using Auger electron spectroscopic analysis. Figure 3 is a diagram showing the results of the Auger electron spectroscopic analysis of the workpiece surface before the machining process. In Figure 3, the point "0" on the abscissa represents the top surface of the workpiece and the points "5" and "10" represent surface depths of 5000 and 10000 angstroms, respectively. Further, the ordinate represents the strength of elements. As shown in Figure 3, the same amount of iron(Fe), carbon(C), and oxygen(O), and a small amount of chromium(Cr), silicon(Si) and molybdenum(Mo) are detected on the top surface before the machining process. From the detection of oxygen(O) it may be estimated that the top surface is covered with oxides. However, in the range from the top surface to a surface depth of 5000 angstroms, iron(Fe) suddenly increases while carbon(C) and oxygen(O) suddenly decrease.

Figure 4 is a diagram showing the results of the Auger electron spectroscopic analysis of the workpiece surface after the machining process with a mineral oil based dielectric not using the powder. It is recognized that carbon(C) has entered into the workpiece in the machining process.

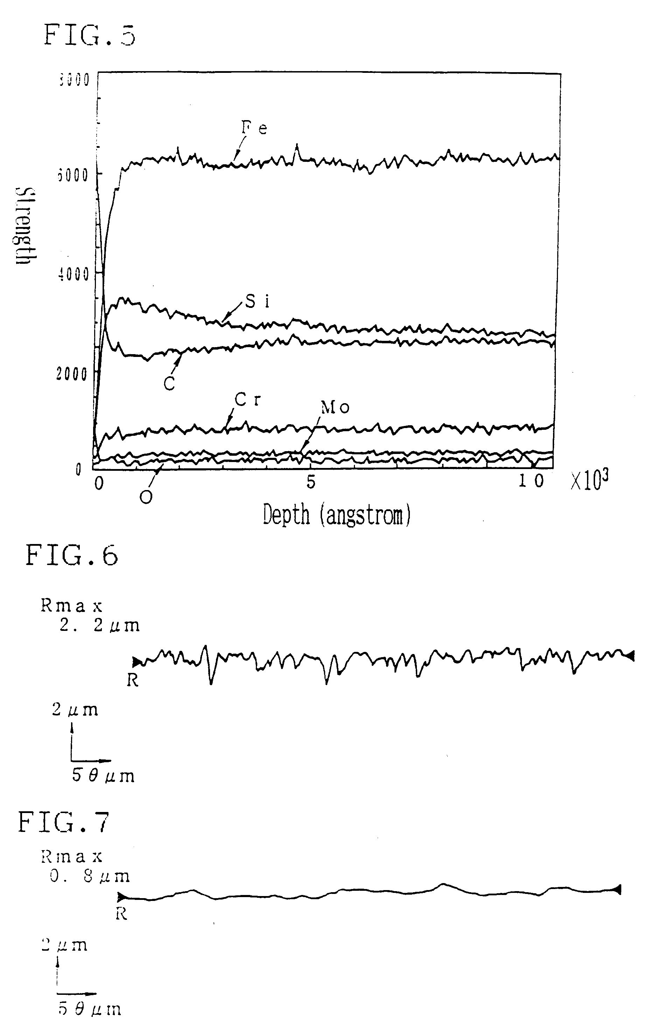

Figure 5 is a diagram showing the results of the Auger electron spectroscopic analysis of the workpiece surface after the machining process with the EDM fluid of the invention. As shown in Figure 5, a large amount of carbon(C) and a small amount of iron(Fe) are detected on the top surface after the machining process. In the range from the top surface to a surface depth of 5000 angstroms, carbon(C) suddenly decreases while iron(Fe) suddenly increases and silicon(Si) correspondingly increases.

Figures 6 and 7 are diagrams showing the measured roughnesses of the workpiece surfaces shown in the micrographs of Figures 2 and 3, respectively. Referring to Figures 6 and 7, it is found that the workpiece surface finished with the EDM fluid of the invention is very smooth.

The foregoing example has been presented for purposes of illustration and description. It is not intended to be exhaustive or to limit the invention to the precise form disclosed, and obviously many modifications and variations are possible in the light of the above teaching. It is intended that the scope of the invention be defined by the claims appended hereto.

## Claims

1. An electric discharge machining fluid comprising a mixture of a liquid dielectric and a powder of silicon and inorganic oxide, said powder being present in an amount from 0.1 to 5.0 wt % of said liquid dielectric, and said silicon comprising more than 80 wt % polycrystalline silicon.

2. The electric discharge machining fluid of Claim 1, wherein said inorganic oxide includes silicon oxide, iron oxide and/or calcium oxide.

3. The electric discharge machining fluid of Claim 2, wherein said inorganic oxide is present in an amount from 0.01 to 10 wt % of said silicon.

4. The electric discharge machining fluid of Claim 3, wherein said silicon has an average particle diameter of 0.1 to 100 micrometres.

5. The electric discharge machining fluid of Claim 2, produced by kneading said powder with a liquid kneading medium dissolvable in said liquid dielectric to make a liquid concentrate and dispersing said liquid concentrate in said liquid dielectric.

6. The electric discharge machining fluid of Claim 5, wherein said liquid kneading medium includes oils mainly composed of an aromatic hydrocarbon or aromatic hydrocarbons, having a density of more than 0.93 g/millilitre at 15°C.

7. A method for machining a workpiece by electric discharge using a tool electrode comprising; admixing a powder of silicon and inorganic oxide to a liquid dielectric to form an electric discharge machining fluid, said powder being present in an amount from 0.1 to 5.0 wt % of said liquid dielectric, said silicon comprising more than 80 wt % polycrystalline silicon; and supplying said electric discharge machining fluid into a machining gap between said workpiece and said tool electrode for use in a finishing process.

8. The method of Claim 7, wherein said inorganic oxide consists of silicon oxide, iron oxide and/or calcium oxide.

9. The method of Claim 8, wherein said inorganic oxide is present in an amount from 0.01 to 10 wt % of said silicon.

10. The method of Claim 9, wherein said silicon has an average particle diameter of 0.1 to 100 micrometres.

11. The method of Claim 7, wherein said admixing comprises kneading said powder with a liquid kneading medium dissolvable in said liquid dielectric to make a liquid concentrate and dispersing said liquid concentrate in said liquid dielectric.

12. The method of Claim 11, wherein said liquid kneading medium includes oils mainly composed of an aromatic hydrocarbon or aromatic hydrocarbons, having a density of more than 0.93 g/millilitre at 15°C.

## Patentansprüche

1. Elektroerosionsflüssigkeit, die ein Gemisch aus einer dielektrischen Flüssigkeit und einem Pulver aus Silicium und anorganischem Oxid umfaßt, wobei das Pulver in einem Anteil von 0,1 bis 5,0 Gew.-%, bezogen auf die dielektrische Flüssigkeit, enthalten ist und das Silicium zu mehr als 80 Gew.-% aus polykristallinem Silicium besteht.

2. Elektroerosionsflüssigkeit nach Anspruch 1, wobei das anorganische Oxid Siliciumdioxid, Eisenoxid und/oder Calciumoxid enthält.

3. Elektroerosionsflüssigkeit nach Anspruch 2, wobei das anorganische Oxid in einem Anteil von 0,01 bis 10 Gew.-%, bezogen auf das Silicium, enthalten ist.

4. Elektroerosionsflüssigkeit nach Anspruch 3, wobei das Silicium einen mittleren Teilchendurchmesser von 0,1 bis 100 »m aufweist.

5. Elektroerosionsflüssigkeit nach Anspruch 2, hergestellt durch
- Verkneten des Pulvers mit einem flüssigen, in der dielektrischen Flüssigkeit löslichen Knetmedium unter Bildung eines flüssigen Konzentrats, und
- Dispergieren des flüssigen Konzentrats in der dielektrischen Flüssigkeit.

6. Elektroerosionsflüssigkeit nach Anspruch 5, wobei das flüssige Knetmedium Öle enthält, die vorwiegend aus einem oder mehreren aromatischen Kohlenwasserstoffen bestehen und eine Dichte von mehr als 0,93 g/ml bei 15 °C aufweisen.

7. Verfahren zur elektroerosiven Bearbeitung von Werkstücken unter Verwendung einer Werkzeugelektrode, das umfaßt:
- Zumischen eines Pulvers aus Silicium und anorganischem Oxid zu einer dielektrischen Flüssigkeit, wodurch eine Elektroerosionsflüssigkeit erzeugt wird, wobei das Pulver in einem Anteil von 0,1 bis 5,0 Gew.-%, bezogen auf die dielektrische Flüssigkeit, enthalten ist und das Silicium zu mehr als 80 Gew.-% aus polykristallinem Silicium besteht, und
- Zuführen der Elektroerosionsflüssigkeit in den Bearbeitungsspalt zwischen dem Werkstück und der Werkzeugelektrode,
zur Verwendung bei einer Endbearbeitung.

8. Verfahren nach Anspruch 7, wobei das anorganische Oxid aus Siliciumdioxid, Eisenoxid und/oder Calciumoxid besteht.

9. Verfahren nach Anspruch 8, wobei das anorganische Oxid in einem Anteil von 0,01 bis 10 Gew.-%, bezogen auf das Silicium, enthalten ist.

10. Verfahren nach Anspruch 9, wobei das Silicium einen mittleren Teilchendurchmesser von 0,1 bis 100 »m aufweist.

11. Verfahren nach Anspruch 7, wobei das Zumischen das Verkneten des Pulvers mit einem flüssigen, in der dielektrischen Flüssigkeit löslichen Medium unter Bildung eines flüssigen Konzentrats und das Dispergieren des flüssigen Konzentrats in der dielektrischen Flüssigkeit umfaßt.

12. Verfahren nach Anspruch 11, wobei das flüssige Knetmedium Öle enthält, die vorwiegend aus einem oder mehreren aromatischen Kohlenwasserstoffen bestehen und eine Dichte von mehr als 0,93 g/ml bei 15 °C aufweisen.

## Revendications

1. Liquide d'usinage par électro-érosion, comprenant un mélange de diélectrique liquide et d'une poudre de silicium et d'oxyde inorganique, ladite poudre étant présente en une quantité comprise entre 0,1 et 5,0% en poids dudit diélectrique liquide, et ledit silicium contenant plus de 80% en poids de silicium polycristallin.

2. Liquide d'usinage par électro-érosion selon la revendication 1, dans lequel ledit oxyde inorganique comprend l'oxyde de silicium, l'oxyde de fer et/ou l'oxyde de calcium.

3. Liquide d'usinage par électro-érosion selon la revendication 2, dans lequel ledit oxyde inorganique est présent en une quantité comprise entre 0,01 et 10% en poids dudit silicium.

4. Liquide d'usinage par électro-érosion selon la revendication 3, dans lequel ledit silicium a un diamètre de particules moyen de 0,1 à 100 »m.

5. Liquide d'usinage par électro-érosion selon la revendication 2, produit en malaxant ladite poudre avec un milieu de malaxage liquide pouvant être dissous dans ledit diélectrique liquide pour faire un concentré liquide et en dispersant ledit concentré liquide dans ledit diélectrique liquide.

6. Liquide d'usinage par électro-érosion selon la revendication 5, dans lequel ledit milieu de malaxage liquide comprend des huiles composées principalement d'un hydrocarbure aromatique ou d'hydrocarbures aromatiques, ayant une densité supérieure à 0,93 g/ml à 15°C.

7. Procédé pour usiner une pièce par électro-érosion en utilisant une électrode-outil, comprenant les étapes suivantes : mélanger une poudre de silicium et d'oxyde inorganique dans un diélectrique liquide pour former un liquide d'usinage par électro-érosion, ladite poudre étant présente en une quantité comprise entre 0,1 et 5,0% en poids dudit diélectrique liquide, ledit silicium comprenant plus de 80% en poids de silicium polycristallin, et amener ledit liquide d'usinage par électro-érosion dans un intervalle d'usinage entre ladite pièce à usiner et ladite électrode-outil pour être utilisé dans un procédé de finition.

8. Procédé selon la revendication 7, dans lequel ledit oxyde inorganique consiste en un oxyde de silicium, un oxyde de fer et/ou un oxyde de calcium.

9. Procédé selon la revendication 8, dans lequel ledit oxyde inorganique est présent en une quantité comprise entre 0,01 et 10% en poids dudit silicium.

10. Procédé selon la revendication 9, dans lequel ledit silicium a un diamètre de particules moyen de 0,1 à 100 »M.

11. Procédé selon la revendication 7, dans lequel ledit mélange consiste à malaxer ladite poudre avec un milieu de malaxage liquide pouvant être dissous dans ledit diélectrique liquide pour faire un concentré liquide et à disperser ledit concentré liquide dans ledit diélectrique liquide.

12. Procédé selon la revendication 11, dans lequel ledit milieu de malaxage liquide contient des huiles composées principalement d'un hydrocarbure aromatique et/ou d'hydrocarbures aromatiques, ayant une densité supérieure à 0,93 g/ml à 15°C.
